# EUROPÄISCHE PATENTSCHRIFT

(11) **EP 1 884 428 B1**
(45) Veröffentlichungstag und Bekanntmachung des Hinweises auf die Patenterteilung: **10.11.2010**
(21) Anmeldenummer: 07014782.2
(22) Anmeldetag: 27.07.2007
(51) Int. Cl.: B60T 17/00, B60T 17/02

(54) **Druckluftaufbereitungseinrichtung zum Versorgen einer Kraftfahrzeugbremsanlage mit Druckluft**
Compressed air treatment device for supplying compressed air to the braking system of a motor vehicle
Dispositif de préparation de l'air comprimé destiné à alimenter une installation de freinage d'un véhicule automobile avec de l'air comprimé

(30) Priorität: 27.07.2006 DE 102006034785
(43) Veröffentlichungstag der Anmeldung: 06.02.2008
(73) Patentinhaber: KNORR-BREMSE Systeme für Nutzfahrzeuge GmbH, 80809 München (DE)
(72) Erfinder: Riedel, Markus, 81375 München (DE); Ertl, Thomas, 80995 München (DE)
(74) Vertreter: Schönmann, Kurt

(56) Entgegenhaltungen:
- WO-A-02/060735
- DE-U1-202004 017 303

## Beschreibung

Die Erfindung betrifft eine Druckluftaufbereitungseinrichtung zum Versorgen einer Kraftfahrzeugbremsanlage mit Druckluft, mit einer Lufttrocknereinheit zum Aufbereiten von über einen Drucklufteingang zuführbarer Druckluft, welche der Lufttrocknereinheit nachgeschalteten Verbraucheranschlüssen zuführbar ist, einem Ablassventil zum Entlüften einer Eingangsseite der Lufttrocknereinheit in einem Regenerationsbetrieb der Druckluftaufbereitungseinrichtung, und mehreren Kreissicherungsventilen, die zwischen der Lufttrocknereinheit und den Verbraucheranschlüssen angeordnet sind.

Des Weiteren betrifft die Erfindung eine Druckluftaufbereitungseinrichtung zum Versorgen einer Kraftfahrzeugbremsanlage mit Druckluft, mit einer Lufttrocknereinheit zum Aufbereiten von Druckluft, welche der Lufttrocknereinheit nachgeschalteten Verbraucheranschlüssen zuführbar ist, mehreren Kreissicherungsventilen, die zwischen der Lufttrocknereinheit und den Verbraucheranschlüssen angeordnet sind, einer elektronischen Steuereinheit, und zumindest einem elektronischen Sensor.

Aus der DE 198 34 705 A1 ist eine Druckluftaufbereitungseinrichtung bekannt, die als Monoblock ausgeführt ist. Das heißt, bei dieser Druckluftaufbereitungseinrichtung sind sämtliche Komponenten in einem einzigen Gehäuse untergebracht, an welches die Filterpatrone koppelbar ist. Jedoch besteht die Möglichkeit, dass insbesondere die mit einem Drucklufteingang, an den ein Kompressor Druckluft zuführt, und der Eingangsseite der Filterpatrone in Verbindung stehenden Luftführungen mit Kompressoröl und dessen Zersetzungsprodukten beladen werden. Eine Reinigung dieser Luftführungen ist zeitaufwendig und teuer beziehungsweise nicht praktikabel, was den Austausch der Druckluftaufbereitungseinrichtung insgesamt erforderlich macht.

Darüber hinaus ist ebenso eine Reparatur von ausgefallenen elektronischen Komponenten oftmals nicht praktikabel.

Solche Druckluftaufbereitungseinrichtungen sind beispielsweise in den WO 02/060735 und DE 20 2004 017 303 ebenfalls veröffentlicht.

Es ist daher die Aufgabe der vorliegenden Erfindung die gattungsgemäße Druckluftaufbereitungseinrichtung derart weiterzubilden, dass diese wartungsfreundlicher ist.

Diese Aufgabe wird durch die Druckluftaufbereitungseinrichtung gemäß Anspruch 1 und 8 gelöst.

Vorteilhafte Ausgestaltungen und Weiterbildungen der Erfindung ergeben sich aus den abhängigen Ansprüchen.

Die erfindungsgemäße Druckluftaufbereitungseinrichtung baut auf dem gattungsgemäßen Stand der Technik dadurch auf, dass zumindest der Drucklufteingang an und das Ablassventil in einem ersten Gehäuse angeordnet sind und zumindest die Kreissicherungsventile in einem separaten zweiten Gehäuse angeordnet sind, welches mit dem ersten Gehäuse koppelbar ist. Dadurch ist ein Aufbau realisiert, bei dem mit der noch nicht aufbereiteten Luft in Berührung kommende Komponenten in einem separaten Gehäuse angeordnet sind, welches im Verschmutzungsfall einfach ausgetauscht werden kann. Durch diese Maßnahme kann eine kostengünstigere Wartung realisiert werden, da bei defekten oder verschmutzen Komponenten nicht die gesamte Druckluftaufbereitungseinrichtung ausgetauscht werden muss.

Darüber hinaus kann die erfindungsgemäße Druckluftaufbereitungseinrichtung dadurch weitergebildet sein, dass zwischen dem ersten Gehäuse und dem zweiten Gehäuse eine erste Dichtplatte angeordnet ist, welche angrenzend an die Ebene der Dichtplatte verlaufende Luftführungskanäle ausbildet. Dadurch ist eine fertigungstechnisch sehr günstige Möglichkeit gegeben, um die zumeist kompliziert verlaufenden Luftführungen durch Ausnehmungen in der Gehäuseoberfläche zu bilden, die dann aufgrund des Abschlusses durch die Dichtplatte zu vollständigen Luftführungen werden. Bisher mussten diese Luftführungen in einem Monoblock ausgebildet werden. Bei dem nun vorgeschlagenen Aufbau kann die Luftführung durch Veränderung der Ausnehmungen leicht modifiziert werden bzw. von vornherein flexibel gestaltet werden.

Die gleichen Vorteile können dadurch erreicht werden, dass auf der der ersten Dichtplatte abgewandten Seite des zweiten Gehäuses eine zweite Dichtplatte vorgesehen ist, welche an die Ebene der Dichtplatte angrenzende Luftführungskanäle ausbildet.

Des Weiteren kann die erfindungsgemäße Druckluftaufbereitungseinrichtung so weitergebildet sein, dass mehrere Magnetventile zur Steuerung des Regenerationsbetriebs im zweiten Gehäuse aufgenommen sind. Somit sind die Magnetventile, die zur Steuerung von aufbereiteter Druckluft vorgesehen sind in dem Gehäuse angeordnet, welches längeren Wartungsintervallen unterworfen ist.

Darüber hinaus kann die erfindungsgemäße Druckluftaufbereitungseinrichtung so ausgebildet sein, dass zumindest einer der Verbraucheranschlüsse ein Betriebsbremsanschluss ist, dem ein Kreissicherungsventil vorgeschaltet ist, wobei eine zu den Magnetventilen führende Seriellversorgungsleitung zwischen dem Betriebsbremsanschluss und dem Kreissicherungsventil abzweigt und die Seriellversorgungsleitung zumindest abschnittsweise mittels der ersten Dichtplatte ausgebildet ist. Dadurch sind alle Magnetventile mit sehr einfachen Mitteln mit Druckluft versorgbar. Darüber hinaus ist eine solche Druckluftversorgung der Magnetventile auch dann noch aus Betriebsbremsbehältern möglich, wenn der verbraucherseitige Druck bereits unter die Schließdrücke der Kreissicherungsventile, beispielsweise aufgrund der Regeneration oder durch Abstellen des Kraftfahrzeugs, abgefallen ist.

Ferner kann die erfindungsgemäße Druckluftaufbereitungseinrichtung so ausgebildet sein, dass ein drittes Gehäuse vorgesehen ist, in dem eine elektronische Steuereinheit und/oder Drucksensoren und/oder ein Temperatursensor aufgenommen sind. Dadurch, dass diese elektronischen Komponenten tendenziell eine höhere Wartungsanfälligkeit aufweisen, ist es vorteilhaft, sie in einem separaten Gehäuse anzuordnen. Somit kann eine verbesserte und kostengünstigere Wartung sichergestellt werden, bei der im Reparaturfall anstatt der kompletten Druckluftaufbereitungseinrichtung nur das dritte Gehäuse mit allen enthaltenen elektronischen Komponenten auszutauschen ist. Ebenso wird durch Anordnen der elektronischen Komponenten in einem separaten dritten Gehäuse eine verbesserte Zugänglichkeit zu diesen geschaffen, wodurch es ermöglicht wird, einzelne Komponenten, wie beispielsweise nur die elektronische Steuereinheit, ein oder mehrere Drucksensoren und/oder den Temperatursensor auszutauschen.

Darüber hinaus kann die erfindungsgemäße Druckluftaufbereitungseinrichtung so ausgebildet sein, dass zumindest ein Druckbegrenzer im zweiten Gehäuse angeordnet ist. Durch diesen Druckbegrenzer können verschiedene Druckniveaus realisiert werden, um Anforderungen von Kraftfahrzeugherstellern nach unterschiedlichen Druckniveaus gerecht zu werden.

Darüber hinaus baut die erfindungsgemäße Druckluftaufbereitungseinrichtung auf dem gattungsgemäßen Stand der Technik dadurch auf, dass zumindest die Kreissicherungsventile in einem zweiten Gehäuse angeordnet sind und ein separates mit dem zweiten Gehäuse koppelbares drittes Gehäuse vorgesehen ist, in dem die elektronische Steuereinheit und der zumindest eine elektronische Sensor aufgenommen sind. Als elektronischer Sensor sind dabei insbesondere ein Drucksensor und/oder ein Temperatursensor angedacht. Dadurch, dass diese elektronischen Komponenten tendenziell eine höhere Wartungsanfälligkeit aufweisen, ist es vorteilhaft, sie in einem separaten Gehäuse anzuordnen. Somit kann eine verbesserte und kostengünstigere Wartung sichergestellt werden, bei der im Reparaturfall anstatt der kompletten Druckluftaufbereitungseinrichtung nur das dritte Gehäuse mit allen enthaltenen elektronischen Komponenten auszutauschen ist. Ebenso wird durch Anordnen der elektronischen Komponenten in einem separaten dritten Gehäuse eine verbesserte Zugänglichkeit zu diesen geschaffen, wodurch es ermöglicht wird, einzelne Komponenten, wie beispielsweise nur die elektronische Steuereinheit, ein oder mehrere Drucksensoren und/oder den Temperatursensor auszutauschen.

Als besonders vorteilhaft erweist sich bei der Erfindung daher, dass eine Druckluftaufbereitungseinrichtung zur Verfügung gestellt wird, in der die wartungsintensiveren Komponenten in zumindest einem zusätzlichen separaten Gehäuse angeordnet sind.

Des Weiteren stellt die Erfindung ein Kraftfahrzeug mit einer erfindungsgemäßen Druckluftaufbereitungseinrichtung bereit. Dieses Fahrzeug liefert die vorstehend beschriebenen Vorteile in übertragener Weise.

Eine bevorzugte Ausführungsform der Erfindung wird nachfolgend mit Bezug auf die begleitenden Zeichnungen beispielhaft erläutert.

Es zeigen:
- Figur 1: ein Schaltungsdiagramm eines Ausführungsbeispiels einer erfindungsgemäßen Druckluftaufbereitungseinrichtung; und
- Figur 2: eine schematische Darstellung der erfindungsgemäßen Druckluftaufbereitungseinrichtung.

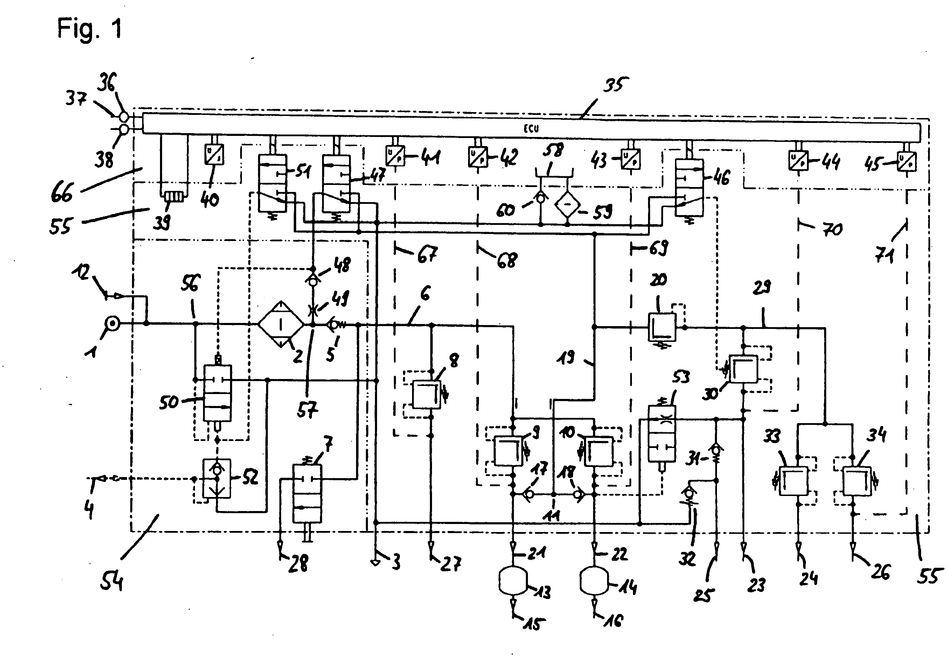

Figur 1 zeigt ein Schaltungsdiagramm eines Ausführungsbeispiels einer erfindungsgemäßen Druckluftaufbereitungseinrichtung. Die erfindungsgemäße Druckluftaufbereitungseinrichtung hat einen Drucklufteingang 1, dem Druckluft von einem nicht dargestellten Kompressor zuführbar ist. Parallel zu dem Drucklufteingang 1 ist ein Fremdbefüllungsanschluss 12 vorgesehen, über den das Druckluftsystem des Nutzfahrzeugs beispielsweise in einer Werkstatt ohne den Betrieb des Kompressors befüllt werden kann. Über den Drucklufteingang 1 gelangt Druckluft zu einer Lufttrocknereinheit 2 und von dort über ein Hauptrückschlagventil 5 und eine Hauptleitung 6 zu den später erläuterten Druckluftverbrauchern. Das Hauptrückschlagventil 5 ist vorgesehen, um ein Rückströmen von Druckluft von den Verbrauchern in Richtung der Lufttrocknereinheit 2 zu vermeiden, wobei es sich vorzugsweise um ein federvorgespanntes Rückschlagventil handelt, welches ein Durchströmen erst ab Erreichen eines bestimmten Druckschwellenwertes gestattet. Von der Hauptleitung 6 zweigt eine zu einem Reifenfüllanschluss 28 führende Leitung ab, in der ein Reifenfüllventil 7 angeordnet ist. Das Reifenfüllventil 7 ist vorzugsweise ein 2/2-Wegeventil mit manueller Betätigung und kann bei Bedarf aus einer geschlossenen in eine geöffnete Stellung geschaltet werden, um über den Reifenfüllanschluss 28 Druckluft zur Befüllung von Fahrzeugreifen zu entnehmen. Des Weiteren ist in einer von der Hauptleitung 6 abzweigenden und zu einem Luftfederungsanschluss 27 führenden Leitung ein Luftfederungsventil 8 angeordnet. Das Luftfederungsventil 8 ist vorzugsweise ein Überströmventil, so dass, wenn an dem mit der Hauptleitung 6 verbundenen Eingang des Luftfederungsventils 8 die Druckluft einen bestimmten vorbestimmten Öffnungsdruck übersteigt, das Luftfederungsventil 8 von einer geschlossenen in eine geöffnete Stellung schaltet und ein Überströmen von Druckluft von der Hauptleitung 6 zum Luftfederungsanschluss 27 erlaubt. Das Luftfederungsventil 8 bleibt solange in einem geöffneten Zustand, bis ein Schließdruck unterschritten wird, wobei der Schließdruck kleiner ist als der Öffnungsdruck. Diese allgemeine Funktionsweise dieses Überströmventils gilt in übertragener Weise auch für die nachfolgend beschriebenen Überströmventile.
Die Überströmventile wirken somit als Kreissicherungsventile, um die Betriebskreise, die ihnen nachgeschaltet sind, zu sichern. Diese Sicherung wird bewirkt, indem die Überströmventile schließen, sobald der Druck im entsprechenden Leitungsstrang unter den Schließdruck abfällt, d.h. im Falle einer Leckage und dem damit verbundenen Druckabfall in diesem Leitungsstrang, wird dieser Leitungsstrang von der Druckluftversorgung und den anderen Kreisen getrennt. Weiter stromabwärts zweigen von der Hauptleitung 6 zwei parallel angeordnete Betriebsbremsventile 9 und 10 ab, welche vorzugsweise Überströmventile sind. Die Ausgangsseiten der Betriebsbremsventile 9 und 10 führen jeweils zu einem Betriebsbremsanschluss 21, 22. Die Betriebsbremsanschlüsse 21, 22 führen jeweils zu einem Betriebsbremsbehälter 13, 14, an die die Betriebsbremskreise 15, 16 angeschlossen sind. Zwischen den jeweiligen Betriebsbremsventilen 9, 10 und ihren entsprechenden Betriebsbremsanschlüssen 21, 22 zweigt jeweils eine Leitung ab, wobei sich beide Leitungen in einem Verbindungspunkt 11 treffen. Zwischen den Abzweigungen und dem Verbindungspunkt 11 sind jeweils Rückschlagventile 17, 18 angeordnet, die jeweils ein Strömen von Druckluft hin zum Verbindungspunkt 11 gestatten und ein Strömen in die umgekehrte Richtung verhindern. Vom Verbindungspunkt 11 zweigt eine Seriellversorgungsleitung 19 ab, welche nachfolgend erläuterte weitere Verbraucher mit Druckluft versorgt. Somit ist ein Eingang eines Nebenverbraucher-Druckbegrenzers 20 an die Seriellversorgungsleitung 19 gekoppelt. Der Ausgang des Nebenverbraucher-Druckbegrenzers 20 ist mit einer Nebenverbraucherleitung 29 verbunden, von der eine Leitung abzweigt, die zu einem Anhängeranschluss 23 führt und in der ein Nebenverbraucherventil 30 angeordnet ist. Das Nebenverbraucherventil 30 ist vorzugsweise als Überströmventil ausgeführt, dessen Schaltverhalten mittels eines Steuereingangs einstellbar ist. An den Anhängeranschluss 23 kann eine nicht dargestellte Anhängerbremsanlage angeschlossen werden. Zwischen Nebenverbraucherventil 30 und Anhängeranschluss 23 zweigt eine Leitung ab, die zu einem Feststellbremsenanschluss 25 führt, wobei in dieser Leitung ein Rückschlagventil 31 vorgesehen ist, welches nur eine Strömung in Richtung hin zum Feststellbremsenanschluss 25 zulässt. Das Rückschlagventil 31 ist vorzugsweise ein federvorgespanntes Rückschlagventil, so dass ein Durchströmen des Rückschlagventils 31 erst ab Erreichen eines bestimmten Schwellenwerts gestattet wird. Durch Druckbeaufschlagung des Feststellbremsenanschlusses 25 wird eine Feststellbremse aus der arretierten Stellung gelöst. Zwischen Rückschlagventil 31 und Feststellbremsenanschluss 25 zweigt eine zu einer Entlüftung 3 führende Leitung ab, in die ein Rückschlagventil 32 geschaltet ist. Das Rückschlagventil 32 öffnet ab einem bestimmten, einstellbaren Schwellenwert und schützt so die mit dem Feststellbremsenanschluss 25 verbundene Leitung vor überhöhtem Druck. Der Schwellenwert zum Öffnen des Rückschlagventils 32 wird dabei höher eingestellt, als der entsprechende Schwellenwert des Rückschlagventils 31. Das Rückschlagventil 32 fungiert demnach als Sicherheitsventil, wobei dem Fachmann auch Sicherheitsventile mit anderen Ausgestaltungen bekannt sind, die an dieser Stelle nicht näher erläutert werden. Darüber hinaus zweigt zwischen Nebenverbraucherventil 30 und Anhängeranschluss 23 eine zur Entlüftung 3 führende Leitung ab, in der ein als 2/2-Wegeventil ausgeführtes Ventil 53 angeordnet ist. Die Steuerleitung des Ventils 53 ist mit der Leitung zwischen dem Betriebsbremsventil 10 und dem Betriebsbremsanschluss 22 verbunden, so dass abhängig vom Druck am Betriebsbremsanschluss 22 das Ventil 53 entweder in eine geschlossene Stellung schaltet, in der es verhindert, dass Druckluft aus der mit dem Anhängeranschluss 23 verbundenen Anhängerbremsanlage zur Entlüftung abströmt, während das Ventil 53 im anderen Schaltzustand ein gedrosseltes Abströmen von Druckluft aus der mit dem Anhängeranschluss 23 verbundenen Anhängerbremsanlage zur Entlüftung 3 gestattet. Bei Druckbeaufschlagung des Betriebsbremsanschlusses 22 schaltet dabei das Ventil 53 in seine geschlossene Stellung. Alternativ kann der Steuereingang des Ventils 53 anstatt mit dem Betriebsbremsanschluss 22 ebenso mit dem Betriebsbremsanschluss 21 verbunden sein. Von der Nebenverbraucherleitung 29 zweigen des Weiteren zwei parallel angeordnete Leitungen ab, von denen eine zu einem Zusatzverbraucheranschluss 24 und die andere zu einem Getriebeschaltungsanschluss 26 führt. Zwischen Nebenverbraucherleitung 29 und Zusatzverbraucheranschluss 24 ist ein Zusatzverbraucherventil 33 vorgesehen, während zwischen Nebenverbraucherleitung 29 und Getriebeschaltungsanschluss 26 ein Getriebeschaltungsventil 34 angeordnet ist. Beide Ventile sind vorzugsweise Überströmventile. Bezugszeichen 35 kennzeichnet eine elektronische Steuereinheit (ECU) zum Steuern des Betriebs der Luftaufbereitungseinrichtung. Die elektronische Steuereinheit 35 ist mit einem Zentralstecker 36 verbunden, über den die elektronische Steuereinheit 35 beispielsweise mit einem CAN-Bus 37 verbunden werden kann, um eine Schnittstelle zur sonstigen Fahrzeugelektronik auszubilden. Es ist ferner ein optionaler Feuchtestecker 38 vorgesehen, über den ein Signal eines externen nicht dargestellten Feuchtesensors eingelesen werden kann. Dieser ist üblicherweise am tiefsten Punkt eines der Betriebsbremsbehälter 13, 14 angebracht. Mit der elektronischen Steuereinheit 35 stehen ferner eine Heizung 39 sowie ein Temperatursensor 40 in Verbindung. Darüber hinaus sind mit der elektronischen Steuereinheit 35 diverse Drucksensoren 41-45 verbunden, wobei der Drucksensor 41 einen Druck am Luftfederungsanschluss 27, der Drucksensor 42 einen Druck am Betriebsbremsanschluss 21, der Drucksensor 43 einen Druck am Betriebsbremsanschluss 22, der Drucksensor 44 einen Druck am Anhängeranschluss 23 und der Drucksensor 45 einen Druck am Getriebeschaltungsanschluss 26 erfasst und in die elektronische Steuereinheit 35 zur Auswertung einspeist. Von der elektronischen Steuereinheit 35 wird ein Nebenverbraucher-Vorsteuerventil 46 geschaltet, welches als 3/2-Wege-Magnetventil ausgeführt ist. In der in Figur 1 dargestellten Schaltstellung verbindet das Nebenverbraucher-Vorsteuerventil 46 einen Steuereingang des Nebenverbraucherventils 30 mit der Entlüftung 3. In der nicht in Figur 1 dargestellten Schaltstellung verbindet das Nebenverbraucher-Vorsteuerventil 46 den Steuereingang des Nebenverbraucherventils 30 mit der Seriellversorgungsleitung 19, wodurch der in der Seriellversorgungsleitung 19 herrschende Druck an den Steuereingang des Nebenverbraucherventils 30 angelegt wird und dieses Nebenverbraucherventil 30 daraufhin ein Überströmen von Druckluft von der Nebenverbraucherleitung 29 zu dem Anhängeranschluss 23 und dem Feststellbremsenanschluss 25 verhindert. Gleich nach dem Einschalten der Zündung wird das Nebenverbraucher-Vorsteuerventil 46 bestromt, so dass dem Steuereingang des Nebenverbraucherventils 30 Druckluft zugeführt wird. Damit soll verhindert werden, dass bei vorzeitig gelöster Handbremse in einem Zustand, in dem noch nicht genügend Druck aufgebaut ist, das Fahrzeug zunächst durch die Feststellbremse gebremst wird und im Laufe des Druckaufbaus, wenn sich der Fahrer eventuell nicht im Fahrersitz befindet, das Fahrzeug selbsttätig zu rollen beginnt. Erst wenn über das Nebenverbraucher-Vorsteuerventil 46 der Steuereingang des Nebenverbraucherventils 30 wieder entlüftet wird, kann die Feststellbremse über den Feststellbremsenanschluss 25 gelöst werden. Dazu ist jedoch nach dem Erreichen eines Druckes, der ausreicht, um die Bremsanlage über die Betriebsbremskreise 15 und 16 betätigen zu können, ein Bestätigungssignal durch den Fahrzeugführer erforderlich. Diese Funktionsweise der Feststellbremse wird als "Northland Parkbrake Function" bezeichnet. Zum Zwecke der Regeneration der Lufttrocknereinheit 2 ist ein Regenerationsventil 47 vorgesehen, welches als 3/2-Wege-Magnetventil ausgeführt ist. Das Regenerationsventil 47 ist mit einem Rückschlagventil 48 und einer Drossel 49 in Reihe geschaltet. Das Rückschlagventil 48 vermeidet während der Förderphasen des Kompressors ein Überströmen von Druckluft über das Regenerationsventil 47 zur Entlüftung 3. Die Drossel 49 ist vorgesehen, um die Strömungsgeschwindigkeit in einer die Regeneration begünstigenden Weise zu begrenzen. Stromaufwärts des Rückschlagventils 48, d.h. zwischen Rückschlagventil 48 und dem Regenerationsventil 47 ist eine Steuerleitung angeschlossen, die zu einem Ablassventil 50 führt. In der in Figur 1 dargestellten Schaltstellung des Regenerationsventils 47 ist somit die Steuerleitung des Ablassventils 50 mit der Entlüftung 3 verbunden, und das Rückschlagventil 48 verhindert, dass während der Förderphasen des Kompressors Druckluft über das Regenerationsventil 47 zur Entlüftung 3 überströmt. In der nicht in Figur 1 dargestellten Schaltstellung verbindet das Regenerationsventil 47 die Steuerleitung des Ablassventils 50 mit dem in der Seriellversorgungsleitung 19 herrschenden Druck. Außerdem wird dieser Druck ebenso an die Verbindungsleitung zwischen Lufttrocknereinheit 2 und Hauptrückschlagventil 5 angelegt. Das Ablassventil 50 ist zwischen die Eingangsseite der Lufttrocknereinheit 2 und die Entlüftung 3 geschaltet. In der in Figur 1 dargestellten Schaltstellung ist diese Verbindung zwischen Eingangsseite der Lufttrocknereinheit 2 und Entlüftung 3 gesperrt, wohingegen in der nicht in Figur 1 dargestellten Schaltstellung die Eingangsseite der Lufttrocknereinheit 2 mit der Entlüftung 3 verbunden ist. Ferner ist ein Druckregler-Magnetventil 51 vorgesehen, welches als 3/2-Wege-Magnetventil ausgebildet ist und über die elektronische Steuereinheit 35 angesteuert wird. Über das Druckregler-Magnetventil 51 kann einem Kompressor-Steuerausgang 4 über ein Steuerventil 52 der in der Seriellversorgungsleitung 19 herrschende Druck zugeführt werden. Neben der Druckzuführung zum Kompressor-Steuerausgang 4 kann derselbe Druck mittels des Druckregler-Magnetventils 51 an einen weiteren Steuereingang des Ablassventils 50 angelegt werden. Dies geschieht in der nicht in Figur 1 dargestellten Schaltstellung des Druckregler-Magnetventils 51, wohingegen in der in Figur 1 dargestellten Schaltstellung der weitere Steuereingang des Ablassventils 50 sowie der entsprechende Eingang des Steuerventils 52 mit der Entlüftung 3 verbunden ist. Das Ablassventil 50 ist so ausgelegt, dass bei Anliegen eines Drucks an dem Steuereingang, der mittels des Druckregler-Magnetventils 51 geschaltet wird, das Ablassventil 50 auf jeden Fall in die geöffnete Schaltstellung geschaltet wird. Das Steuerventil 52 ist so ausgelegt, dass es bei fehlender Druckbeaufschlagung durch das Druckregler-Magnetventil 51 den Kompressor-Steuerausgang 4 mit der Entlüftung 3 verbindet, wobei auf diese Weise rasche Entlüftung und somit ein sicherer Betrieb des Kompressors im Hinblick auf seine Wiederinbetriebnahme zur Verfügung gestellt wird. Ein weiterer Anschluss des Steuerventils 52 ist zwischen der Entlüftung 3 und dem Ablassventil 50 angeschlossen und somit mit der Entlüftung 3 verbunden. Ferner ist ein Sammelbehälter 58 vorgesehen, der einen Innenraum des Gehäuses der elektronischen Steuereinheit 35 repräsentieren soll. Über ein Druckausgleichselement 59 ist der Sammelbehälter 58 mit der Entlüftung 3 verbunden, um Druckschwankungen innerhalb des Gehäuses der elektronischen Steuereinheit 35 auszugleichen. Das Druckausgleichselement 59 kann von Luft, jedoch nicht von Flüssigkeiten, durchströmt werden und soll das Gehäuse vor Beschädigungen schützen, die ansonsten durch Druckschwankungen, bedingt durch Höhen- oder Temperaturunterschiede, verursacht werden können. Aus Sicherheitsgründen ist der Sammelbehälter 58 zusätzlich mit einem Rückschlagventil 60 versehen, um Druckerhöhungen im Gehäuse der elektronischen Steuereinheit 35 auszugleichen, welche die maximale Durchströmrate des Druckausgleichselements 59 übersteigen. Dabei ist das Rückschlagventil so angeordnet, dass nur eine Strömung vom Sammelbehälter 58 zur Entlüftung 3 ermöglicht wird.

Die dargestellte Druckluftaufbereitungseinrichtung arbeitet wie folgt. Während des normalen Förderbetriebs fördert der Kompressor Druckluft in den Drucklufteingang 1. Folglich gelangt Druckluft durch die Lufttrocknereinheit 2 über das Hauptrückschlagventil 5 zur Hauptleitung 6. Bei Erreichen eines vorbestimmten Druckes in der Hauptleitung 6 gestatten die Überströmventile 8, 9 und 10 ein Überströmen von Druckluft so dass über die Rückschlagventile 17, 18 schließlich auch an der Seriellversorgungsleitung 19 ein bestimmter Druck herrscht. Während des normalen Betriebs wird die Lufttrocknereinheit 2 mit Feuchtigkeit und Fremdpartikeln, beispielsweise Kompressoröl und dessen zersetzungsprodukten, beladen. Um eine Regeneration der Lufttrocknereinheit 2 zu veranlassen, werden das Regenerationsventil 47 und das Druckregler-Magnetventil 51 in ihre nicht dargestellte Position überführt, so dass einerseits über das Regenerationsventil 47 die Regenerationsluftströmung durch das Rückschlagventil 48, die Drossel 49, die Lufttrocknereinheit 2, das aufgrund der Umschaltung des Druckregler-Magnetventils 51 ebenfalls umgeschaltete Ablassventil 50 und die Entlüftung 3 erfolgen kann. Mit der Umschaltung des Druckregler-Magnetventils 51 wird der Kompressor-Steuerausgang 4 druckbeaufschlagt, so dass während des Regenerationsbetriebs der Kompressor abgeschaltet bleibt. Zur Wiederaufnahme des Förderbetriebs nach der Regeneration werden das Regenerationsventil 47 und das Druckregler-Magnetventil 51 wieder in ihre dargestellten Stellungen überführt, so dass die mit ihnen in Verbindung stehenden Steuereingänge entlüftet werden, wobei die Entlüftung des Kompressor-Steuereingangs 4 auf direktem Wege ohne einen Umweg über ein Regenerationsventil erfolgen kann.

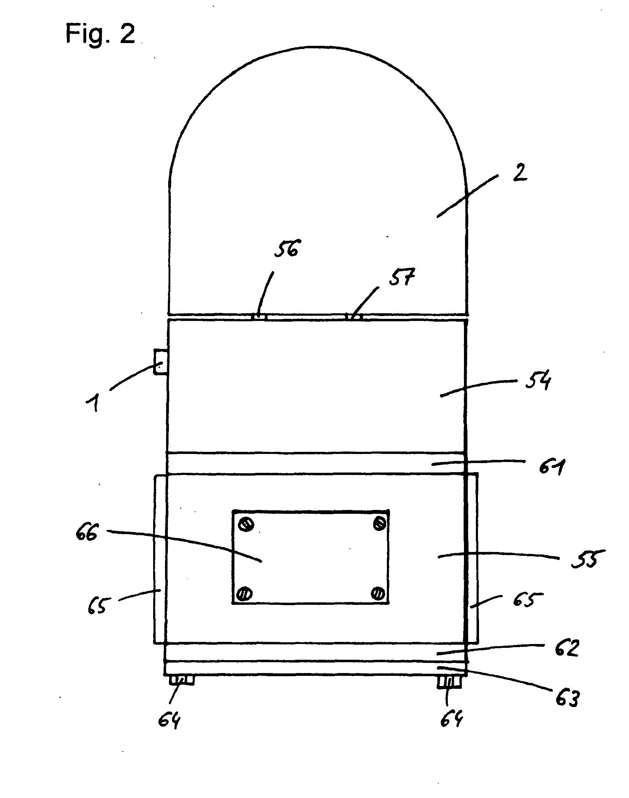

Figur 2 zeigt eine schematische Darstellung der erfindungsgemäßen Druckluftaufbereitungseinrichtung. Figur 2 zeigt insbesondere schematisch die Gehäuseanordnung der Komponenten aus dem Schaltungsdiagramm des bevorzugten Ausführungsbeispiels. Benachbart zu der als austauschbare Filterpatrone ausgeführten Lufttrocknereinheit 2 ist ein erstes Gehäuse 54 vorgesehen, an welches die Lufttrocknereinheit 2, beispielsweise mittels einer Gewindeverschraubung, koppelbar ist. Auf der der Lufttrocknereinheit 2 abgewandten Seite des ersten Gehäuses 54 ist ein separates zweites Gehäuse 55 vorgesehen, welches an das erste Gehäuse 54 koppelbar ist. Zwischen dem ersten Gehäuse 54 und dem zweiten Gehäuse 55 ist eine erste Dichtplatte 61 vorgesehen. Ein drittes Gehäuse 66 ist an das zweite Gehäuse 55 gekoppelt, vorzugsweise geschraubt. Welche Komponenten des bevorzugten Ausführungsbeispiels jeweils in welchem Gehäuse angeordnet sind, lässt sich Figur 1 entnehmen. Dabei sind im Wesentlichen die Komponenten, die in einer Fläche dargestellt sind, welche durch Strichpunktlinien begrenzt ist und mit Bezugszeichen 54 versehen ist, im ersten Gehäuse 54 angeordnet. Andererseits sind im Wesentlichen die Komponenten, die in einer Fläche dargestellt sind, welche durch Strichpunktlinien begrenzt ist und mit Bezugszeichen 55 versehen ist, im zweiten Gehäuse 55 angeordnet. Ferner sind im Wesentlichen die Komponenten, die in einer Fläche dargestellt sind, welche durch Strichpunktlinien begrenzt ist und mit Bezugszeichen 66 versehen ist, im dritten Gehäuse 66 angeordnet. Im Detail bedeutet dies, dass der Drucklufteingang 1, der Fremdbefüllungsanschluss 12, das Ablassventil 50, das Steuerventil 52, der Kompressor-Steuerausgang 4, das Reifenfüllventil 7, das Hauptrückschlagventil 5, das Rückschlagventil 48, die Drossel 49 und zur Lufttrocknereinheit 2 führende Anschlüsse 56, 57 im bzw. am ersten Gehäuse 54 vorgesehen sind. Die Lufttrocknereinheit 2 selbst ist nicht im ersten Gehäuse 54 vorgesehen, sondern wie vorstehend erläutert mit dem ersten Gehäuse 54 koppelbar. Somit sind die Anschlüsse 56, 57 zum Verbinden des ersten Gehäuses 54 mit der Lufttrocknereinheit 2 im bzw. am ersten Gehäuse 54 vorgesehen. Darüber hinaus sind die elektronische Steuereinheit 35, der Temperatursensor 40 und alle Drucksensoren 41-45 im dritten Gehäuse 66 untergebracht. Im zweiten Gehäuse 55 sind das Druckregler-Magnetventil 51, das Regenerationsventil 47, das Nebenverbraucher-Vorsteuerventil 46 und die Heizung 39 befestigt. Ferner sind die vorzugsweise als Überströmventile ausgeführten und als Kreissicherungsventile fungierenden Ventile 8, 9, 10, 30, 33, 34, die Rückschlagventile 17, 18, 31, 32, 60, der Druckbegrenzer 20 und das Ventil 53 im zweiten Gehäuse 55 angeordnet. Zu den Drucksensoren 41-45 werden die zu erfassenden Drücke mittels Druckübertragungselementen 67-71 (siehe Fig. 1), vorzugsweise Druckröhrchen, vom zweiten Gehäuse 55 in das dritte Gehäuse 66 geleitet. Für die Ansteuerung der Magnetventile 46, 47 und 51 besteht eine elektrische Verbindung zwischen dem zweiten Gehäuse 55 und dem dritten Gehäuse 66. Wie in Figur 2 dargestellt, ist an der der ersten Dichtplatte 61 abgewandten Seite des zweiten Gehäuses 55 eine zweite Dichtplatte 62 vorgesehen. Diese wird mittels einer Abschlussplatte 63 gegen das zweite Gehäuse 55 gedrückt. Die Abschlussplatte 63 kann beispielsweise mittels Verschraubungen 64, die durch die zweite Dichtplatte 62 führen, am zweiten Gehäuse 55 festgeschraubt sein. Darüber hinaus ist seitlich am zweiten Gehäuse 55 zumindest ein Federdeckel 65 vorgesehen mittels dem die im zweiten Gehäuse angeordneten Ventile montiert und deren Federn vorgespannt werden können. Die Luftführungen, wie beispielsweise die Hauptleitung 6, die Seriellversorgungsleitung 19, die Nebenverbraucherleitung 29 sowie die Leitungen zwischen den jeweiligen Ventilen 8, 9, 10, 30, 33, 34 und den zugehörigen Verbraucheranschlüssen, 21-24, 26, 27 können angrenzend an die Dichtplatten 61 und/oder 62 ausgebildet werden. Dabei verlaufen die Luftführungen jeweils angrenzend an die Dichtplatten in einer Ebene senkrecht zur Hochachse der Figur 2. Eine Luftführung auf der Oberseite des zweiten Gehäuses 55 wird dabei durch eine auf der Oberseite eingebrachte Ausnehmung ausgebildet, welche durch die Dichtplatte 61 abgeschlossen wird. Luftführungen zur Verbindung des ersten Gehäuses 54 mit dem zweiten Gehäuse 55 sind in der ersten Dichtplatte 61 als Durchgänge ausgebildet. Entsprechend wird eine Luftführung auf der Unterseite des zweiten Gehäuses 55 durch eine auf der Unterseite des zweiten Gehäuses 55 ausgebildete Ausnehmung ausgebildet, welche durch die Dichtplatte 62 abgeschlossen wird. Dadurch kann größtenteils darauf verzichtet werden, im Inneren des zweiten Gehäuses 55 kompliziert verlaufende Luftführungen auszubilden. Vielmehr kann beispielsweise die Zuleitung zu einem bestimmten Ventil auf der Oberseite und die Ableitung auf der gegenüberliegenden Unterseite des zweiten Gehäuses 55 ausgebildet werden. Die entsprechenden Luftführungen zu den Anschlüssen 21-27 oder zu anderen Ventilen oder Druckbegrenzern kann dann durch angrenzend zu den Dichtplatten 61, 62 verlaufende Luftführungen realisiert werden. Vorzugsweise ist die Seriellversorgungsleitung 19, die Hauptleitung 6, die Verbindungsleitungen zwischen den Ventilen 8, 9, 10, 33, 34 und ihren zugehörigen Anschlüssen 21, 22, 24, 26, 27 angrenzend zu der ersten Dichtplatte 61 ausgebildet. Jedoch erlaubt die fertigungstechnisch sehr einfach zu realisierende Ausbildung der Luftführungen vielfältige Variationsmöglichkeiten bezüglich der Anordnung der Luftführungen.

### Bezugszeichenliste :

- 1: Drucklufteingang
- 2: Lufttrocknereinheit
- 3: Entlüftung
- 4: Kompressor-Steuerausgang
- 5: Hauptrückschlagventil
- 6: Hauptleitung
- 7: Reifenfüllventil
- 8: Luftfederungsventil
- 9: Betriebsbremsventil
- 10: Betriebsbremsventil
- 11: Verbindungspunkt
- 12: Fremdbefüllungsanschluss
- 13: Betriebsbremsbehälter
- 14: Betriebsbremsbehälter
- 15: Betriebsbremskreis
- 16: Betriebsbremskreis
- 17: Rückschlagventil
- 18: Rückschlagventil
- 19: Seriellversorgungsleitung
- 20: Nebenverbraucher-Druckbegrenzer
- 21: Betriebsbremsanschluss
- 22: Betriebsbremsanschluss
- 23: Anhängeranschluss
- 24: zusatzverbraucheranschluss
- 25: Feststellbremsenanschluss
- 26: Getriebeschaltungsanschluss
- 27: Luftfederungsanschluss
- 28: Reifenfüllanschluss
- 29: Nebenverbraucherleitung
- 30: Nebenverbraucherventil
- 31: Rückschlagventil
- 32: Rückschlagventil
- 33: Zusatzverbraucherventil
- 34: Getriebeschaltungsventil
- 35: Elektronische Steuereinheit
- 36: Zentralstecker
- 37: CAN-Bus
- 38: Feuchtestecker
- 39: Heizung
- 40: Temperatursensor
- 41: Drucksensor
- 42: Drucksensor
- 43: Drucksensor
- 44: Drucksensor
- 45: Drucksensor
- 46: Nebenverbraucher-Vorsteuerventil
- 47: Regenerationsventil
- 48: Rückschlagventil
- 49: Drossel
- 50: Ablassventil
- 51: Druckregler-Magnetventil
- 52: Steuerventil
- 53: Ventil
- 54: Erstes Gehäuse
- 55: Zweites Gehäuse
- 56: Anschluss für Lufttrocknereinheit
- 57: Anschluss für Lufttrocknereinheit
- 58: Sammelbehälter
- 59: Druckausgleichselement
- 60: Rückschlagventil
- 61: Erste Dichtplatte
- 62: Zweite Dichtplatte
- 63: Abschlussplatte
- 64: Verschraubungen
- 65: Federdeckel
- 66: Drittes Gehäuse
- 67: Druckübertragungselement
- 68: Druckübertragungselement
- 69: Druckübertragungselement
- 70: Druckübertragungselement
- 71: Druckübertragungselement

## Patentansprüche

1. Druckluftaufbereitungseinrichtung zum Versorgen einer Kraftfahrzeugbremsanlage mit Druckluft, mit
- einer Lufttrocknereinheit (2) zum Aufbereiten von über einen Drucklufteingang (1) zuführbarer Druckluft, welche der Lufttrocknereinheit (2) nachgeschalteten Verbraucheranschlüssen (21-27) zuführbar ist,
- einem Ablassventil (50) zum Entlüften einer Eingangsseite der Lufttrocknereinheit (2) in einem Regenerationsbetrieb der Druckluftaufbereitungseinrichtung, und
- mehreren Kreissicherungsventilen (8, 9, 10, 30, 33, 34), die zwischen der Lufttrocknereinheit (2) und den Verbraucheranschlüssen (21-27) angeordnet sind,
- wobei zumindest der Drucklufteingang (1) an und das Ablassventil (50) in einem ersten Gehäuse (54) angeordnet sind und zumindest die Kreissicherungsventile (8, 9, 10, 30, 33, 34) in einem separaten zweiten Gehäuse (55) angeordnet sind, welches mit dem ersten Gehäuse koppelbar ist,
**dadurch gekennzeichnet,**
- **dass** mehrere Magnetventile (47, 51) zur Steuerung des Regenerationsbetriebs in dem separaten zweiten Gehäuse (55) angeordnet sind und
- **dass** eines dieser Magnetventile (47) in einem Druckluftpfad zur Umgehung eines in einer Hauptleitung (6) angeordneten Hauptrückschlagventils (5) angeordnet ist und den Druckluftpfad während eines Regenerationsbetriebs freigibt.

2. Druckluftaufbereitungseinrichtung gemäß Anspruch 1, **dadurch gekennzeichnet, dass** zwischen dem ersten Gehäuse (54) und dem zweiten Gehäuse (55) eine erste Dichtplatte (61) angeordnet ist, welche angrenzend an die Ebene der Dichtplatte (61) verlaufende Luftführungskanäle ausbildet.

3. Druckluftaufbereitungseinrichtung gemäß Anspruch 2, **dadurch gekennzeichnet, dass** auf der der ersten Dichtplatte (61) abgewandten Seite des zweiten Gehäuses (55) eine zweite Dichtplatte (62) vorgesehen ist, welche an die Ebene der Dichtplatte (62) angrenzende Luftführungskanäle ausbildet.

4. Druckluftaufbereitungseinrichtung gemäß Anspruch 2 oder 3, **dadurch gekennzeichnet, dass** zumindest einer der Verbraucheranschlüsse ein Betriebsbremsanschluss (21, 22) ist, dem ein Kreissicherungsventil (9, 10) vorgeschaltet ist, wobei eine zu den Magnetventilen (47, 51) führende Seriellversorgungsleitung (19) zwischen dem Betriebsbremsanschluss (21, 22) und dem Kreissicherungsventil (9, 10) abzweigt und die Seriellversorgungsleitung (19) zumindest abschnittsweise mittels der ersten Dichtplatte (61) ausgebildet ist.

5. Druckluftaufbereitungseinrichtung gemäß einem der vorhergehenden Ansprüche, **dadurch gekennzeichnet, dass** ein drittes Gehäuse (66) vorgesehen ist, in dem eine elektronische Steuereinheit (35) und/oder Drucksensoren (41-45) und/oder ein Temperatursensor (40) aufgenommen sind.

6. Druckluftaufbereitungseinrichtung gemäß einem der vorhergehenden Ansprüche, **dadurch gekennzeichnet, dass** zumindest ein Druckbegrenzer (20) im zweiten Gehäuse (55) angeordnet ist.

7. Kraftfahrzeug mit einer Druckluftaufbereitungseinrichtung gemäß einem der vorhergehenden Ansprüche.

## Claims

1. Compressed-air processing system for supply of a motor vehicle brake system with compressed air, comprising
- an air drier unit (2) for processing compressed air which can be supplied via a compressed-air inflow connector (1), and which can be supplied to load ports (21 - 27) downstream of said air drier unit 82),
- a discharge valve (50) for venting an inflow side of said air drier unit (2) in a regeneration mode of the compressed-air processing system, and
- a plurality of circuit protector valves (8, 9, 10, 30, 33, 34) disposed between said air drier unit (2) and said load ports (21 - 27),
- wherein at least said compressed-air inflow connector (1) and is disposed on a first housing (54) and said venting valve (50) is disposed in said housing (54) and at least said circuit protector valves (8, 9, 10, 30, 33, 34) are disposed in a separate second housing (55) that is adapted for being coupled to said first housing,
**characterised in**
- **that** a plurality of solenoid-operated valves (47, 51) are disposed in said separate second housing (55) for control of the regeneration mode, and
- **that** one of these solenoid-operated valves (47) is disposed in a compressed-air path for by-passing a main non-return valve (5) disposed in a main pipe (6) and releases said compressed-air path during a regeneration mode.

2. Compressed-air processing system according to Claim 1, **characterised in that** a first sealing plate (61) is disposed between said first housing (54) and said second housing (55), which forms air-guiding passages extending adjacent to the plane of said sealing plate (61).

3. Compressed-air processing system according Claim 2, **characterised in that** a second sealing plate (62) is provided on that side of said second housing (55) which is turned away from said first sealing plate (61), which second sealing plate forms air-guiding passages extending adjacent to the plane of said sealing plate (62).

4. Compressed-air processing system according to Claim 2 or 3, **characterised in that** at least one of said load connectors is a service brake connector (231, 22) preceded by an upstream circuit protector valve (9, 10), with a serial supply line (19) branching off between said service brake connector (21, 22) and said circuit protector valve (9, 10) and leading to said solenoid-operated valves (47, 51), and that said serial supply line (19) is configured, at least in segments, by means of said first sealing plate (61).

5. Compressed-air processing system according to any of the preceding Claims, **characterised in that** a third housing (66) is provided in which an electronic controller (35) and/or pressure sensors (41 - 45) and/or a temperature sensor (40) are accommodated.

6. Compressed-air processing system according to any of the preceding Claims, **characterised in that** at least one pressure-limiting means (20) is disposed in said second housing (55).

7. Motor vehicle comprising a compressed-air processing system according to any of the preceding Claims.

## Revendications

1. Dispositif de traitement d'air comprimé pour alimenter une installation de freinage d'un véhicule automobile en air comprimé, comportant
- une unité (2) de séchage d'air destinée à traiter de l'air comprimé qui peut être amené par l'intermédiaire d'une entrée d'air comprimé, air comprimé qui peut être amené à des raccordements (21 à 27) de prélèvement montés en aval de l'unité (2) de séchage d'air,
- une soupape (50) de vidange pour vidanger un côté d'entrée de l'unité (2) de séchage d'air dans un fonctionnement de régénération du dispositif de traitement d'air comprimé, et
- plusieurs soupapes (8, 9, 10, 30, 33, 34) de sécurité de cycle qui sont disposées entre l'unité (2) de séchage d'air et les raccordements (21 à 27) de prélèvement,
- dans lequel au moins l'entrée (1) d'air comprimé et la soupape (50) de vidange sont disposées respectivement sur et dans un premier boîtier (54), et au moins les soupapes (8, 9, 10, 30, 33, 34) de sécurité de cycle sont disposées dans un deuxième boîtier (55) distinct, qui peut être couplé au premier boîtier,
**caractérisé**
- **en ce qu**'une pluralité d'électrovannes (47, 51) destinées à commander le fonctionnement de régénération sont disposées dans le deuxième boîtier (55) distinct et
- en ce que l'une de ces électrovannes (47) est disposée dans un trajet d'air comprimé pour contourner un clapet antiretour (5) principal disposé dans une conduite (6) principale et libère la voie ou trajet d'air comprimé pendant un fonctionnement de régénération.

2. Dispositif de traitement d'air comprimé suivant la revendication 1, **caractérisé en ce qu'**il est disposé entre le premier boîtier (54) et le deuxième boîtier (55) une première plaque (61) d'étanchéité, qui forme des canaux de conduite d'air qui s'étendent en étant délimités par le plan de la plaque (61) d'étanchéité.

3. Dispositif de traitement d'air comprimé suivant la revendication 2, **caractérisé en ce qu'**à côté du deuxième boîtier (55) qui est tourné à l'opposé de la première plaque (61) d'étanchéité, est prévue une deuxième plaque (62) d'étanchéité, qui forme des canaux de conduite d'air délimités par le plan de la plaque (62) d'étanchéité.

4. Dispositif de traitement d'air comprimé suivant la revendication 2 ou 3, **caractérisé en ce qu'**au moins l'un des raccordements de prélèvement est un raccordement (21, 22) de frein de fonctionnement, auquel est raccordée en amont une soupape (9, 10) de sécurité de cycle, une conduite (19) d'alimentation en série menant aux électrovannes (47, 51) effectue une bifurcation entre le raccordement (21, 22) de frein de fonctionnement et la soupape (9, 10) de sécurité de cycle et la conduite (19) d'alimentation en série est formée au moins en partie au moyen de la première plaque (61) d'étanchéité.

5. Dispositif de traitement d'air comprimé suivant l'une des revendications précédentes, **caractérisé en ce qu'**il est prévu un troisième boîtier (66), dans lequel est (sont) reçu(e)(s) une unité (35) de commande électronique et/ou des capteurs (41 à 45) de pression et/ou un capteur (40) de température.

6. Dispositif de traitement d'air comprimé suivant l'une des revendications précédentes, **caractérisé en ce qu'**au moins un limiteur de pression (20) est disposé dans le deuxième boîtier (55).

7. Véhicule automobile comportant un dispositif de traitement d'air comprimé suivant l'une des revendications précédentes.
